# EUROPEAN PATENT SPECIFICATION

(11) **EP 1 977 621 B1**
(45) Date of publication and mention of the grant of the patent: **08.07.2015**
(21) Application number: 06832136.3
(22) Date of filing: 07.12.2006
(51) Int. Cl.: H04W 8/22

(54) **TERMINAL STATUS DISCOVERY IN SECURE USER PLANE LOCATION POSITIONING PROCEDURE**
ENDGERÄTESTATUSENTDECKUNG BEI EINER SICHEREN BENUTZEREBENE-LOKALISIERUNGSPOSITIONIERUNGSPROZEDUR
DÉCOUVERTE DE STATUT DE TERMINAL DANS UNE PROCÉDURE DE POSITIONNEMENT DE LOCALISATION DE PLAN D'UTILISATEUR SÉCURISÉE (SUPL)

(30) Priority: 19.01.2006 EP 06100623; 19.05.2006 US 436772
(43) Date of publication of application: 08.10.2008
(73) Proprietor: Nokia Technologies Oy, 02610 Espoo (FI)
(72) Inventor: KRAUFVELIN, Sebastian, FIN-10520 Tenhola (FI)
(74) Representative: Swindell & Pearson Limited
(86) International application number: PCT/IB2006/054654
(87) International publication number: WO 2007/083200

(56) References cited:
- EP-A- 1 480 483
- WO-A-02/35752
- US-A1- 2001 041 575
- US-A1- 2004 203 922
- US-B1- 6 311 069
- "OMA-AD-SUPL-V1 0-20050719-C: Secure User Plane Location Architecture V1.0" ANNOUNCEMENT OPEN MOBILE ALLIANCE, XX, XX, no. cand version 10, 19 July 2005 (2005-07-19), pages 1-80, XP002410620
- HUAWEI TECHNOLOGIES: "SUPL-V2.0-initial-RD-obtaining-SET-status " OMA-LOC-2005-0388R1-IC-SUPL V2.0.INITIAL-RD-OBTAINING-SET-STATUS, [Online] 29 July 2005 (2005-07-29), pages 1-2, XP002436069 Retrieved from the Internet: URL:http://member.openmobilealliance.org/f tp/public_documents/loc/2005/> [retrieved on 2007-06-04]

## Description

The present invention relates to SUPL (Secure User Plane Location) which is specified in OMA (Open Mobile Alliance). In particular, the present invention relates to a network initiated SUPL positioning procedure.

Location services based on the location of mobile devices are becoming more and more extensive. SUPL employs user plane data bearers for transferring location information and for carrying positioning technology-related protocols between a SUPL Enabled Terminal (SET) and a SUPL Location Platform. (SLP) in a network. SUPL is considered to be an effective way of transferring location information required for computing the location of a target SET. To serve a location service to a client, considerable signalling and position information are transferred between actors such as a SET and a location server. The location server is a node within the OMA Architecture, which comprises an SLP (SUPL Location Platform).

SUPL requires merely an IP (Internet Protocol) capable network and minimum modification to the mobile network, and this is an efficient solution that can be deployed rapidly.

SUPL is intended as an alternative and complement to existing standards based on signalling in the mobile network control plane. SUPL will provide similar capabilities as specified for 3GPP LCS (Location Services). The main difference between SUPL and 3GPP LCS is that in SUPL any messages exchanged between terminal and network for the purpose of determining the position of the terminal is carried over a user plane data bearer instead of using control plane signalling. The user plane designates the functional plane where the information is part of the wireless user data and is transported over user bearers such as the wireless packet data network or SMS (Short Messsage Service). The control plane performs call control and connection control functions and deals with signalling necessary to set up, supervise and release calls and connections. In other words, SUPL assumes that a mobile network or other access network is capable of establishing a data bearer connection between terminal and SLP.

It is to be noted that SUPL functionality is concentrated to the so-called SUPL location server with no specific support needed from existing network elements.

As for 3GPP LCS, SUPL defines two modes of operation, i.e. there may be mobile terminated location requests (MT-LR) or mobile originated location requests (MO-LR) or, to use SUPL terminology, NW (Network) Initiated Location Requests and SET Initiated Location Requests, respectively.

In the NW Initiated scenario the SUPL positioning procedure is initiated by the SUPL server or, using SUPL terminology, the SLP sending a SUPL_INIT message to the target terminal. As the target terminal may not be GPRS (General Packet Radio Service) Attached and have IP connectivity at the time the SUPL_INIT is sent, the message is transported with WAP (Wireless Application Protocol) Push or SMS. Also the mobile terminals may be not IP addressable from the outside because of private IP addresses, NAT (Network Address Translator), etc.

At the same time WAP Push or SMS solves the IP connectivity issue in SUPL one problem remains. When the SUPL_INIT is sent there is currently no way for the SLP to know whether the target terminal is IMSI (International Mobile Subscriber Identity) Attached (the term IMSI Attach is used mainly to identify the procedure when the mobile registers after being switched on), in dedicated mode or idle mode. This means that the SLP has to wait for the target terminal to respond with a SUPL POS INIT message for an arbitrary period of time. E.g. if the target terminal was not IMSI Attached the SUPL INIT message cannot be delivered to the target terminal and the SLP will eventually time out. This wastes resources at the SLP, as it has to maintain its state until the time out occurs.

Another problem is that the WAP Push or SMS may be queued in the WAP PPG (Push Proxy Gateway) or SMSC (Short Message Service Centre) for later delivery. When the message is then delivered to the target terminal it is outdated but there is no way for the target terminal to make that conclusion. This means that it potentially tries to establish a SUPL session with the SLP but the SLP has already purged the state for this request.

For so-called B class GPRS terminals it is also essential to know apart from whether the terminal is IMSI Attached whether the terminal is in dedicated or idle mode. The reason is that a class B GPRS terminal cannot have simultaneous CS and PS connections (refer to 3GPP TS 23.060). In other words, a class B mobile may be attached to both PS (Packet Switched) and CS (Circuit Switched) services, but the mobile can only operate one set of services at a time.

US6311069 relates to a process for notifying a mobile subscriber being positioned of the received positioning request and identity of the requesting Location Application in order to enhance the privacy of the mobile subscriber. A request message, which contains a similar indicator to that of the SETUP message in mobile-terminating calls, is sent by the serving Mobile Switching Centre to the mobile subscriber to cause an alerting tone on the Mobile Station of the mobile subscriber. The mobile subscriber can accept or reject the positioning request based upon the Location Application identity displayed on the Mobile Station.

"OMA-AD-SUPL-V1 0-2005071 9-C: Secure User Plane Location Architecture V1.0", 19 July 2005, pages 1-80, defines the architecture for the Secure User Plane Location (SUPL) service enabler. SUPL employs user plane data bearers for transferring location information between a SUPL Enabled Terminal (SET) and a SUPL Location Platform (SLP) for computing the location of a target SET. A proxy-mode is disclosed where the SUPL application message exchange for service management and positioning determination occurs between the SLP and the SET.

HUAWEI TECHNOLOGIES: "SUPL-V2.0-initial-RD-obtaining-SET-status", OMA-LOC-2005-0388R1-IC-SUPL V2.0. INITIAL-RD-OBTAINING-SET-STATUS, 29 July 2005, pages 1-2, relates to the SLP obtaining the SUPL capability of the target SET by means of a status notification which the SET itself sends to the SLP when the SET is turned on or off. This then avoids the SLP unnecessarily sending SUPL INIT messages to offline or incapable SETs when the SLP receives a location request from an external client.

According to a prior art solution it is proposed that the terminal is responsible for updating its status at the SLP using SUPL signalling. However, e.g. if the terminal runs out of battery power or out of radio coverage the status information is immediately out of synch with the SLP. Also it is not feasible to require that the terminal establishes a SUPL session with the SLP upon Detach and power down.

The present invention has been devised to solve the above problems and to provide an improved SUPL positioning procedure.

According to an aspect of the invention, a network element for exchanging messages with mobile terminals over a user plane data bearer for determining locations of the mobile terminals is provided, the network element comprising:
receiving means for receiving a location request requesting a location of a mobile terminal;
querying means for querying a database or location register associated with the mobile terminal about status information of the mobile terminal; and
determining means for determining on the basis of the status information queried by the querying means whether to initiate a session with the mobile terminal for determining the location of the mobile terminal,
wherein the querying means is configured to query the database or location register when the location request is received by the receiving means.

In particular, a terminal status is discovered when a location is requested instead of maintaining a local status database in an SLP. According to an implementation example, when the location is requested over Le/Lr interfaces the SLP first queries an HLR (Home Location Register) using ATI (Any Time Interrogation). In the ATI response there is subscriber information that can be used to determine the status of the terminal and therefore make an intelligent decision whether the target terminal is reachable or not.

With the present invention, SLP implementations are enabled to dynamically determine a priori knowledge if a target terminal is currently reachable. Moreover, time and processing power in a SLP are saved and response time for application is reduced.

The present invention improves on the earlier proposed solution, which was based on maintaining a local database updated with status information using SUPL signalling, that it obtains the information when needed and it is always accurate. In other words, the information does not get out of synch as with the earlier proposed solution.

Like elements are denoted with like reference signs in the drawings in which:
Fig. 1 shows a network initiated SUPL session in a SUPL architecture.
Fig. 2 shows a schematic block diagram illustrating a network element according to an embodiment of the invention.
Fig. 3 shows a flow diagram illustrating a session initiation procedure according to an embodiment of the invention.
Fig. 4 shows a signalling diagram illustrating an initiation of a SUPL positioning procedure according to an implementation example of the invention.

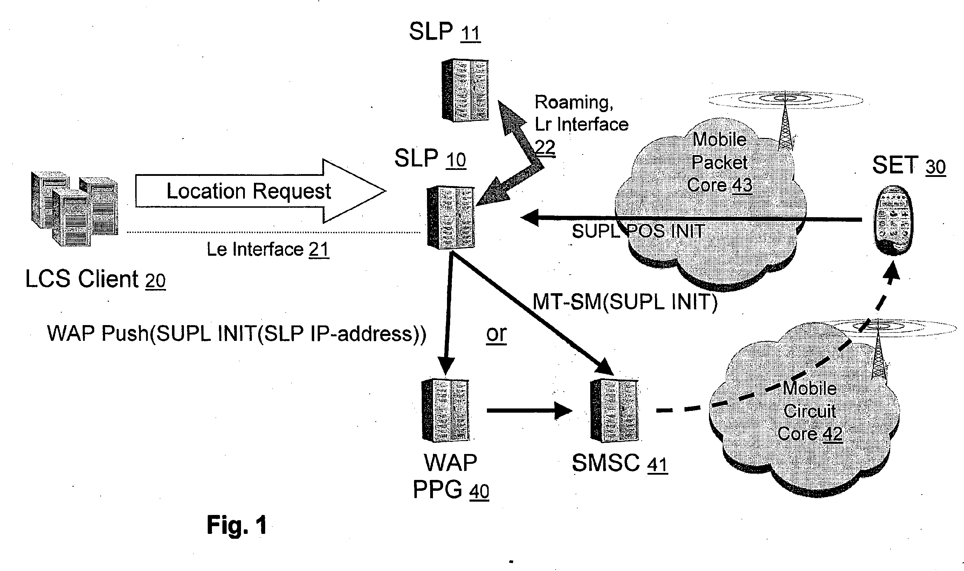

Fig. 1 shows a network initiated SUPL session in a SUPL architecture. A SUPL Location Platform (SLP) 10 comprises a SUPL Location Center (SLC) (not shown) and a SUPL Positioning Center (SPC) (not shown). The SLC and SPC may be integrated into a single system. The SLC system coordinates the operations of SUPL in the network and manages the SPCs. The SPC provides GPS (Global Positioning System) Assistance data to a SET 30 and performs the function of calculating the position of the SET 30.

The SET 30 supports the procedures defined in SUPL as it interacts with the network over the User Plane, e.g. TCP/IP (Transport Control Protocol/Internet Protocol) over GPRS. The SET 30 supports SET-based and/or SET-assisted positioning calculation.

The SUPL INIT. message is used by the SLP 10 to initiate a SUPL session with the SET 30. This message is used in Network Initiated SUPL Services. This message may contain the initial Target SET User Notification, Confirmation Privacy instructions, MAC (Message Authentication Code) and Key Identity. The SUPL INIT message sent from the SLP 10 to SET 30 initiates the SUPL location session. A WAP PUSH or an SMS Trigger is used in the Network initiated location request. The protocols involved in WAP Push are Push Access Protocol (PAP) for conveying the SUPL INIT message from the SLP 10 via a Push Proxy Gateway (PPG) 40, and Push Over-The-Air Protocol (POTAP) from the PPG 40 to the SET 30. SMS delivery of the SUPL INIT message is another option, and can be initiated from the SLP 10 to an SMSC 41. From the WAP PPG 40 or the SMSC 41 the SUPL INIT message is forwarded to the SET 30 via the mobile circuit core network 42 and the applicable radio access network.

When the SET 30 receives the SUPL INIT message, the SET 30 attaches itself to packet data services (e.g. GPRS attach) if it is not already attached and sends a SUPL POS INIT message via a mobile packet core network 43 to the SLP to initiate a SUPL positioning protocol session with the SLP 10 and to provide cell sector information, desired positioning method and/or assistance data as well as the capabilities of the SET 30.

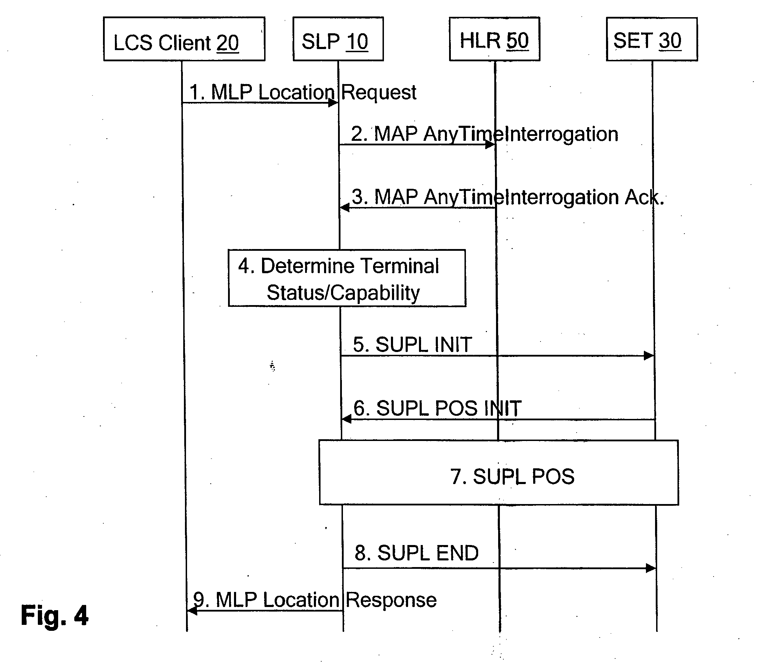

Then, a SUPL POS message (refer to Fig. 4, not shown in Fig. 1) follows which is a message wrapper used between the SLP 10 and the SET 30 to wrap the positioning procedure messages (RRLP(Radio Resource LCS Protocol)/RRC (Radio Resource Control)/TIA(Telecommunications Industry Association)-801).

Finally, a SUPL END message (refer to Fig. 4, not shown in Fig. 1) is used by the SLP 10 to end an existing SUPL session.

The SLP 10 may initiate a SUPL session with the SET 30 when receiving a location request from an LCS client 20 via the Le interface 21, or from another SLP 11 via, the Lr interface 22. Before the SLP 10 initiates the SUPL session, it discovers whether the SET 30 is reachable and whether a session between the network element and the mobile terminal can be established, which process is described in the following.

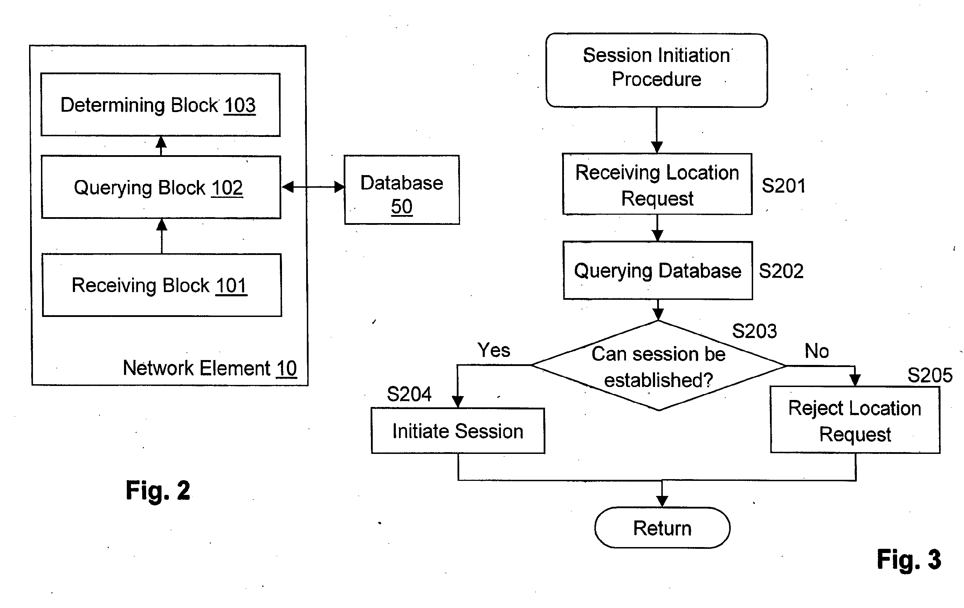

Fig. 2 shows a schematic block diagram illustrating a network element 10 according to an embodiment of the invention. The network element 10 exchanges messages with mobile terminals over a user plane data bearer for determining locations of the mobile terminals. The network element 10 comprises the SLP 10, 11 shown in Fig. 1, and the mobile terminals comprise the SET 30 shown in Fig. 1.

According to Fig. 2, the network element 10 comprises a receiving block 101, a querying block 102 and a determining block 103. When the network element 10 by means of the receiving block 101 receives a location request requesting a location of a mobile terminal, the querying block 102 queries a database or location register 50 associated with the mobile terminal about status information of the mobile terminal. The determining block 103 then determines on the basis of the queried status information whether to initiate a session with the mobile terminal for determining the location of the mobile terminal. The database or location register 50 is located within the mobile network. The database 50 may comprise a Home Location Register (HLR), a Visitor Location Register (VLR) and/or a Serving GPRS Support Node (SGSN).

It is to be noted that the blocks 101-103 of the network element 10 may be grouped together such that the functions of these blocks are performed by one or more super-blocks and/or that the functions of these blocks may be further separated into sub-blocks.

Fig. 3 shows a flow diagram illustrating a session initiation procedure according to an embodiment of the invention.

In step S201, a location request requesting a location of a mobile terminal is received. The mobile terminal comprises the SET 30 shown in Fig. 1. Upon receiving the location request, in step S202, a database or location register associated with the mobile terminal is queried about status information. In step S203, it is determined on the basis of the status information whether to initiate a session with the mobile terminal for determining the location of the mobile terminal. The session comprises a SUPL session. In other words, from the status information it is determined whether a session between the network element 10 and the mobile terminal can be established. When it is determined in step S203 that the session can be established, in step S204 a session with the mobile terminal is initiated. However, when it is determined in step S203 that the session cannot be established, in step S205 the location request is rejected and a corresponding error may be indicated.

The status information may indicate whether the mobile terminal is International Mobile Subscriber Identity (IMSI) attached, in dedicated mode or in idle mode.

In the following an implementation example of the invention is described with reference to Fig. 4 which shows a signalling diagram illustrating an initiation of a SUPL positioning procedure according to the invention.

When an MLP (Mobile Location Protocol) location request for a target mobile terminal or SET 30 is received at an SLP 10 e.g. from an LCS client 20 (communication 1 in Fig. 4), before the SLP 10 initiates the SUPL procedures it sends a MAP ATI (AnyTimeInterrogation) message to an HLR 50 of the target mobile terminal (communication 2 in Fig. 4) to obtain status information of the target mobile terminal or SET 30. The address/identity of the target mobile terminal is obtained from the MLP location request.

The HLR (Home Location Register) 50 is a database within the HPLMN (Home Public Land Mobile Network). It provides routing information for e.g. MT (Mobile Terminated) calls and SMS (Short Message Service). It is also responsible for the maintenance of user subscription information. This is distributed to the relevant VLR (Visitor Location Register) or SGSN (Serving GPRS Support Node) through the attach process and mobility management procedures such as Location Area and Routing Area updates.

The HLR 50 responds to the MAP AnyTimeInterrogation (ATI) message with a MAP AnyTimeInterrogation Acknowledgement (ATI Ack) message (communication 3 in Fig. 4). The MAP ATI and MAP ATI Ack messages are routed through the SS7 network. The MAP ATI Ack message contains the following subscriber information:

| | |
|---|---|
| **SubscriberInfo** ::= SEQUENCE { | |
| locationInformation | [0] LocationInformation |
| **OPTIONAL,** | |
| **subscriberState** | **[1] SubscriberState** |
| OPTIONAL, | |
| extensionContainer | [2] ExtensionContainer |
| OPTIONAL, | |
| ... , | |
| locationInformationGPRS | [3] LocationInformationGPRS |
| OPTIONAL, | |
| **ps-SubscriberState** | **[4] PS-SubscriberState** |
| OPTIONAL, | |
| imei | **[5] IMEI** |
| OPTIONAL, | |
| **ms-Classmark2** | **[6] MS-Classmark2** |
| OPTIONAL, | |
| **gprs-MS-Class** | **[7] GPRSMSClass** |
| OPTIONAL, | |
| mnpInfoRes | [8] MNPInfoRes |
| OPTIONAL } | |

The appropriate status/capability information is SubscriberState, ps-SubscriberState, ms-Classmark2 and gprs-MS-Class.

| | |
|---|---|
| **SubscriberState ::≃** CHOICE { | |
| assumedidle | [0] NULL, |
| camelBusy | [1] NULL, |
| netDetNotReachable | NotReachableReason, |
| notProvidedFromVLR | [2] NULL} |

| | |
|---|---|
| **PS-SubscriberState** ::= CHOICE { | |
| notProvidedFromSGSN | [0] NULL, |
| ps-Detached | [1] NULL, |
| ps-AttachedNotReachableForPaging | [2] NULL, |
| ps-AttachedReachableForPaging | [3] NULL, |
| ps-PDP-ActiveNotReachableForPaging | [4] PDP-ContextInfoList, |
| ps-PDP-ActiveReachableForPaging | [5] PDP-ContextInfoList, |
| netDetNotReachable | NotReachableReason } |

Based on the appropriate status/capability information the SLP 10 determines whether it is possible to reach the target mobile terminal or SET 30 and that it is currently able to establish a SUPL session with the SLP 10 (block 4 in Fig. 4). If this is not the case the SLP 10 rejects the location request with a "subscriber not reachable" error which is indicated to the LCS client 20.

Otherwise, in case the terminal status/capability determination reveals that it should be possible to establish a SUPL session between the SLP 10 and the SET 30, the SLP 10 initiates the SUPL session in communication 5 in Fig. 4. The SET 30 responds with a SUPL POS INIT message in communication 6 in Fig. 4, and in block 7 in Fig. 4 positioning procedure messages are exchanged between the SLP 10 and the SET 30. A SUPL END message in communication 8 in Fig. 4 is used by the SLP 10 to end the existing SUPL session. Finally, in communication 9 in Fig. 4 the SLP 10 sends an MLP location response message to the LCS client 20 indicating the location of the SET 30.

An alternative implementation is to replace the MAP-AnyTimeInterrogation message with a MAP-ProvideSubscriberInfo (PSI) message which is sent from the SLP 10 directly to a VLR (Visitor Location Register) and/or SGSN (Serving GPRS Support Node). MAP-PSI is essentially returning the same information as MAP-ATI. However, MAP-ATI does not require a priori knowledge of the serving node (MSC or SGSN) where to send the message as it is always sent to the HLR of the subscriber. MAP-PSI on the other hand requires that routing information be retrieved from the HLR so that the message can be sent to the current serving node.

According to the invention, upon receiving a location request for a mobile terminal the status of the mobile terminal is discovered before initiating a SUPL positioning procedure. For this purpose, status information is retrieved from a database or location register outside SUPL and it is determined from the status information whether a SUPL session can be established with the mobile terminal. Retrieving the status information may comprise exchanging messages with the database or location register on the control plane over the SS7 network.

It is to be understood that the above description is illustrative of the invention and is not to be construed as limiting the invention. Various modifications and applications may occur to those skilled in the art without departing from the scope of the invention as defined by the appended claims.

## Claims

1. A network element (10) for exchanging messages with mobile terminals (30) over a user plane data bearer in a mobile network for determining locations of the mobile terminals (30), the network element (10) comprising:
receiving means (101) for receiving a location request requesting a location of a mobile terminal (30);
querying means (102) for querying a database or location register (50) located within the mobile network and associated with the mobile terminal (30) about status information of the mobile terminal (30); and
determining means (103) for determining, based on the status information queried by the querying means, whether to initiate a Secure User Plane Location session with the mobile terminal (30) over a user plane data bearer for determining the location of the mobile terminal (30),
wherein the querying means (102) is configured to query the database or location register (50) when the location request is received by the receiving means.

2. The network element (10) of claim 1, wherein the determining means (103) is configured to determine from the status information whether the Secure User Plane Location session between the network element (10) and the mobile terminal (30) can be established.

3. The network element (10) of claim 2, wherein
the determining means (103) is configured to reject the location request and indicate a corresponding error when the determining means (103) determines that the Secure User Plane Location session between the network element (10) and the mobile terminal (30) cannot be established, and
the determining means (103) is configured to initiate the Secure User Plane Location session with the mobile terminal (30) when the determining means (103) determines that the Secure User Plane Location session between the network element (10) and the mobile terminal (30) can be established.

4. The network element (10) of claim 1, wherein the network element (10) comprises:
a Secure User Plane Location Platform.

5. The network element (10) of claim 1, wherein the database or location register (50) comprises at least one of a Home Location Register,Visitor Location Register, and a Serving General Packet Radio Service Support Node.

6. A method of exchanging messages with mobile terminals (30) over a user plane data bearer in a mobile network for determining locations of the mobile terminals (30), the method comprising the steps of:
receiving a location request requesting a location of a mobile terminal (30);
querying a database or location register located within the mobile network and associated with the mobile terminal (30) about status information of the mobile terminal (30) when the location request is received; and
determining based on the status information whether to initiate a Secure User Plane Location session with the mobile terminal (30) over a user plane data bearer for determining the location of the mobile terminal (30).

7. The method of claim 6, wherein the status information indicates whether the mobile terminal (30) is International Mobile Subscriber Identity attached, in dedicated mode or in idle mode.

8. The method of claim 6, wherein the querying comprises exchanging messages with the database or location register (50) on a control plane over an SS7 network.

9. The method of claim 6, wherein the querying comprises sending an Any Time Interrogation message or Provide Subscriber Information message according to Mobile Application Protocol to the database or location register (50) and receiving an acknowledgement of the any time interrogation message or provide subscriber information message including the status information.

10. A computer program product embodied on a computer-readable medium, including a program for a processing device, comprising software code portions for performing the method of any one of claims 6 to 9 when the program is run on the processing device.

11. The computer program product of claim 10, wherein the program is directly loadable into an internal memory of the processing device.

## Patentansprüche

1. Netzelement (10) zum Austauschen von Nachrichten mit mobilen Endgeräten (30) über einen Anwenderebenendatenträger in einem mobilen Netz zum Bestimmen von Orten der mobilen Endgeräte (30), wobei das Netzelement (10) Folgendes umfasst:
Empfangsmittel (101) zum Empfangen einer Ortsanfrage, die einen Ort eines mobilen Endgeräts (30) anfordert;
Abfragemittel (102) zum Abfragen einer Datenbank oder eines Ortsregisters (50), das sich innerhalb des mobilen Netzes befindet und mit dem mobilen Endgerät (30) verbunden ist, nach Zustandsinformationen des mobilen Endgeräts (30); und
Bestimmungsmittel (103) zum Bestimmen aufgrund der durch die Abfragemittel abgefragten Zustandsinformationen, ob eine Secure User Plane Location-Sitzung mit dem mobilen Endgerät (30) über einen Anwenderebenendatenträger zum Bestimmen des Orts des mobilen Endgeräts (30) einzuleiten ist,
wobei die Abfragemittel (102) konfiguriert sind, die Datenbank oder das Ortregister (50) dann abzufragen, wenn die Ortsanfrage durch die Empfangsmittel empfangen wird.

2. Netzelement (10) nach Anspruch 1, wobei die Bestimmungsmittel (103) konfiguriert sind, aus den Zustandsinformationen zu bestimmen, ob die Secure User Plane Location-Sitzung zwischen dem Netzelement (10) und dem mobilen Endgerät (30) eingerichtet werden kann.

3. Netzelement (10) nach Anspruch 2, wobei
die Bestimmungsmittel (103) konfiguriert sind, die Ortsanfrage abzuweisen und einen entsprechenden Fehler anzuzeigen, wenn die Bestimmungsmittel (103) bestimmen, dass die Secure User Plane Location-Sitzung zwischen dem Netzelement (10) und dem mobilen Endgerät (30) nicht eingerichtet werden kann, und
die Bestimmungsmittel (103) konfiguriert sind, die Secure User Plane Location-Sitzung mit dem mobilen Endgerät (30) einzuleiten, wenn die Bestimmungsmittel (103) bestimmen, dass die Secure User Plane Location-Sitzung zwischen dem Netzelement (10) und dem mobilen Endgerät (30) eingerichtet werden kann.

4. Netzelement (10) nach Anspruch 1, wobei das Netzelement (80) Folgendes umfasst:
eine Secure User Plane Location-Plattform.

5. Netzelement (10) nach Anspruch 1, wobei die Datenbank oder das Ortsregister (50) ein Heimortsregister und/oder ein Besucherortsregister und/oder einen Serving General Packet Radio Service Support-Knoten umfasst.

6. Verfahren zum Austauschen von Nachrichten mit mobilen Endgeräten (30) über einen Anwenderebenendatenträger in einem mobilen Netz zum Bestimmen von Orten der mobilen Endgeräte (30), wobei das Verfahren die folgenden Schritte umfasst:
Empfangen einer Ortsanfrage, die einen Ort eines mobilen Endgeräts (30) anfordert;
Abfragen einer Datenbank oder eines Ortsregisters (50), das sich innerhalb des mobilen Netzes befindet und mit dem mobilen Endgerät (30) verbunden ist, nach Zustandsinformationen des mobilen Endgeräts (30), wenn die Ortsanfrage empfangen wird; und
Bestimmen aufgrund der Zustandsinformationen, ob eine Secure User Plane Location-Sitzung mit dem mobilen Endgerät (30) über einen Anwenderebenendatenträger zum Bestimmen des Orts des mobilen Endgeräts (30) einzuleiten ist.

7. Verfahren nach Anspruch 6, wobei die Zustandsinformationen angeben, ob dem mobilen Endgerät (30) eine International Mobile Subscriber-Identität angehängt ist, ob es in einer dedizierten Betriebsweise ist oder ob es in einem Ruhezustand ist.

8. Verfahren nach Anspruch 6, wobei das Abfragen umfasst, Nachrichten mit der Datenbank oder dem Ortsregister (50) auf einer Steuerebene über ein SS7-Netz auszutauschen.

9. Verfahren nach Anspruch 6, wobei das Abfragen umfasst, eine Any Time Interrogation-Nachricht oder eine Provide Subscriber Information-Nachricht gemäß dem Mobile Application-Protokoll an die Datenbank oder das Ortsregister (50) zu senden und eine Bestätigung der Any Time Interrogation-Nachricht oder der Provide Subscriber Information-Nachricht, die die Zustandsinformationen enthält, zu empfangen.

10. Computerprogrammprodukt, das in einem computerlesbaren Medium enthalten ist, das ein Programm für eine Verarbeitungsvorrichtung enthält, die Softwarecodeteile umfasst, um das Verfahren nach einem der Ansprüche 6 bis 9 auszuführen, wenn das Programm auf der Verarbeitungsvorrichtung läuft.

11. Computerprogrammprodukt nach Anspruch 10, wobei das Programm direkt in einen internen Speicher der Verarbeitungsvorrichtung ladbar ist.

## Revendications

1. Élément réseau (10) permettant d'échanger des messages avec des terminaux mobiles (30) sur un support de données de plan utilisateur dans un réseau mobile pour déterminer les emplacements des terminaux mobiles (30), l'élément réseau (10) comprenant :
des moyens de réception (101) destinés à recevoir une requête de localisation demandant un emplacement d'un terminal mobile (30) ;
des moyens d'interrogation (102) destinés à interroger une base de données ou un registre de localisation (50) situés à l'intérieur du réseau mobile et associés au terminal mobile (30) relativement à des informations d'état du terminal mobile (30) ; et
des moyens de détermination (103) destinés à déterminer, en fonction des informations d'état demandées par les moyens d'interrogation, s'il faut initier une session de localisation de plan utilisateur sécurisée avec le terminal mobile (30) sur un support de données de plan utilisateur pour déterminer l'emplacement du terminal mobile (30),
les moyens d'interrogation (102) étant configurés pour interroger la base de données ou le registre de localisation (50) lorsque la requête de localisation est reçue par les moyens de réception.

2. Élément réseau (10) selon la revendication 1, dans lequel les moyens de détermination (103) sont configurés pour déterminer à partir des informations d'état si la session de localisation de plan utilisateur sécurisée entre l'élément réseau (10) et le terminal mobile (30) peut être établie.

3. Élément réseau (10) selon la revendication 2, dans lequel
les moyens de détermination (103) sont configurés pour rejeter la requête de localisation et indiquer une erreur correspondante lorsque les moyens de détermination (103) déterminent que la session de localisation de plan utilisateur sécurisée entre l'élément réseau (10) et le terminal mobile (30) ne peut pas être établie, et
les moyens de détermination (103) sont configurés pour initier la session de localisation de plan utilisateur sécurisée avec le terminal mobile (30) lorsque les moyens de détermination (103) déterminent que la session de localisation de plan utilisateur sécurisée entre l'élément réseau (10) et le terminal mobile (30) peut être établie.

4. Élément réseau (10) selon la revendication 1, dans lequel l'élément réseau (10) comprend :
une plateforme de localisation de plan utilisateur sécurisée.

5. Élément réseau (10) selon la revendication 1, dans lequel la base de données ou le registre de localisation (50) comprennent au moins un élément parmi un registre des abonnés nominaux, un enregistreur de localisation des visiteurs, et un noeud de prise en charge de service général de radiocommunication par paquets (GPRS) de desserte.

6. Procédé permettant d'échanger des messages avec des terminaux mobiles (30) sur un support de données de plan utilisateur dans un réseau mobile pour déterminer les emplacements des terminaux mobiles (30), le procédé comprenant les étapes suivantes :
recevoir une requête de localisation demandant un emplacement d'un terminal mobile (30) ;
interroger une base de données ou un registre de localisation situés à l'intérieur du réseau mobile et associés au terminal mobile (30) relativement à des informations d'état du terminal mobile (30) lorsque la requête de localisation est reçue ; et
déterminer, en fonction des informations d'état s'il faut initier une session de localisation de plan utilisateur sécurisée avec le terminal mobile (30) sur un support de données de plan utilisateur pour déterminer l'emplacement du terminal mobile (30).

7. Procédé selon la revendication 6, dans lequel les informations d'état indiquent si le terminal mobile (30) est associé à une identité internationale de l'abonné mobile, en mode dédié ou en mode inactif.

8. Procédé selon la revendication 6, dans lequel l'étape consistant à interroger comprend : échanger des messages avec la base de données ou le registre de localisation (50) sur un plan de commande sur un réseau SS7.

9. Procédé selon la revendication 6, dans lequel l'étape consistant à interroger comprend : envoyer un message Interrogation à tout moment ou un message Fournir des informations d'abonné selon un protocole de partie d'application mobile (MAP) à la base de données ou au registre de localisation (50) et recevoir un accusé de réception du message Interrogation à tout moment ou du message Fournir des informations d'abonné comportant les informations d'état.

10. Produit programme d'ordinateur stocké sur un support lisible par ordinateur, comprenant un programme pour un dispositif de traitement, comportant des parties de code logiciel permettant de mettre en oeuvre le procédé selon l'une quelconque des revendications 6 à 9 lorsque le programme est exécuté sur le dispositif de traitement.

11. Produit programme d'ordinateur selon la revendication 10, dans lequel le programme est directement chargeable dans une mémoire interne du dispositif de traitement.
